# EUROPEAN PATENT APPLICATION

(11) **EP 3 800 550 A1**
(43) Date of publication of application: **07.04.2021**
(21) Application number: 19200894.4
(22) Date of filing: 01.10.2019
(51) Int. Cl.: G06F 9/48

(54) **CONTROLLER AND CONTROL METHOD**

(71) Applicant: Omron Corporation, Kyoto-shi, Kyoto 600-8530 (JP)
(72) Inventor: SCHEFFER, Fred, 5234 GM 's-Hertogenbosch (NL)
(74) Representative: Horn Kleimann Waitzhofer Patentanwälte PartG mbB

(57) **Abstract**

A controller (1, 1') for controlling a controlled system (2), comprising:
a plurality of software containers (3), which are each configured to store a real-time function (RT-F) and a non-real-time function (NRT-F) in parallel; and
an execution unit (4) for executing the stored real-time functions (RT-F) and non-real-time functions (NRT-F) for controlling the controlled system (2), the execution unit (4) being configured to execute the real-time functions (RT-F) within predetermined controller time constraints and to execute the non-real-time functions (NRT-F) without time constraints.

## Description

The present invention relates to a controller for controlling a controlled system and to a method for controlling such a controlled system.

Computers often comprise controllers for controlling controlled systems which for example include industrial actuators and sensors. Such controllers can include a broad variety of functions to be executed for controlling the controlled system. Such functions for example include real-time functions and non-real-time functions. It is known to combine real-time and non-real-time functions using hypervisors. However, this hypervisor approach requires many hardware resources because complete operating systems are virtualized. In view of this, it is desired to deal with the real-time behavior and the non-real-time behavior of functions controlling a controlled system in a more adapted manner.

It is one object of the present invention to provide an improved controller for controlling a controlled system. A further objective is the provision of an improved method for controlling such a controlled system.

According to a first aspect, a controller for controlling a controlled system is provided. The controller comprises:
a plurality of software containers, which are each configured to store a real-time function and a non-real-time function in parallel; and
an execution unit for executing the stored real-time functions and non-real-time functions for controlling the controlled system, the execution unit being configured to execute the real-time functions within predetermined controller time constraints and to execute the non-real-time functions without time constraints.

The controller of the first aspect in particular allows for a storing and scheduling of real-time functions and non-real-time functions. In particular, the controller allows packaging both real-time and non-real-time functions in a same software container. Thereby, a function that combines real-time and non-real-time functions may be deployed easily as one entity. Real-time and non-real-time functions can be deployed in a single container, in particular without requiring a virtualization by a hypervisor, thereby reducing the hardware requirements for controlling the controlled system.

The controlled system may be an industrial system, for example comprising industrial actuators such as robots as well as sensors. The controller may be incorporated in a computer, in particular in an industrial personal computer (industrial PC or IPC).

Software containers, which are also called "data containers" or just "containers" can be platforms which bundle software (for example an application and all its dependencies, including libraries and configuration files) into a single package. The bundled package can for example be moved as a whole, from one computer environment to another. At the same time, a container can allow an isolation of the software of one container from the software of other containers.

Overall, container solutions may be more lightweight in terms of hardware than hypervisor/virtual machine solutions because multiple containers share one operating system (OS) while hypervisors require an OS for each application. Thereby, with the controller according to the first aspect, storage efficiency may be increased while reducing storage costs.

The real-time functions and non-real-time functions are designated together as "functions" in the following. The functions can be pieces of software, which are used together to control the controlled system. The functions for example define tasks to be performed by the controlled system.

Real-time functions can be defined as functions having higher requirements in terms of processing time than the non-real-time functions. In particular, real-time functions are associated with time-critical tasks of the controlled system that need to be executed in real-time, namely without any buffering delays. In other words, the execution unit may execute the real-time-function as it comes in, without buffering delay. The execution unit may execute the real-time-functions in accordance with the predetermined controller time constraints, which can define a maximum time delay for executing the real-time functions (which is typically kept small).

On the other hand, the execution unit may execute the non-real-time functions without time constraints. This in particular means that the non-real-time functions have less constraints regarding execution delays. Globally, the execution unit may thus prioritize the execution of the real-time functions over the execution of the non-real-time functions.

For example, a real-time function may control the movement of an arm of an industrial robot, while a non-real-time function may run non-critical monitoring tasks for diagnostics of the movement of the robot's arm, for example in order to reduce power consumption.

The software containers may each store at least one real-time function and at least one non-real-time function. Storing a real-time function aside from a non-real-time function in a same container can be useful in cases where the real-time function and the non-real-time function have linked functionalities regarding the controlling of the controlled system, for example if they both relate to the control of a same aspect of the controlled system. In such a case, the storage of the real-time function and of the linked non-real-time function in a same container may even be required.

Thus, storing real-time functions and non-real-time functions in a same container is advantageous in reducing the hardware requirement for dealing with real-time functions and non-real-time functions while taking advantage of the above-described advantages of container solutions and dealing with different criticalities.

According to an embodiment, the execution unit is configured to execute a selected real-time function selected from the real-time functions stored in the software containers by mapping the selected real-time function to a corresponding real-time task in a host operating system hosting the controller.

In particular, the selected real-time function is mapped to a task when it is executed. The host operating system can be the operating system of the computer or IPC hosting the controller. The host operating system may be a RTOS (real-time operating system) which is capable of processing real-time process data (here, the real-time function) as it comes in, typically without buffering delays.

According to a further embodiment, the execution unit is configured to execute a selected non-real-time function selected from the non-real-time functions stored in the software containers using a package stored in a same software container as the selected non-real-time function, in particular using the namespaces feature in the Linux kernel. In particular, the execution unit executes the real-time functions and the non-real time functions in a different manner.

According to a further embodiment, the execution unit comprises a plurality of processor cores and is configured to execute the real-time functions on a different processor core or on different processor cores than the non-real-time functions.

The execution unit may further execute the real-time functions on dedicated processor cores which are exclusively reserved for executing real-time functions. The execution unit may also include processor cores which are dedicated for executing non-real-time functions.

According to a further embodiment, the execution unit is configured to control the controlled system by executing the real-time functions in an order prescribed by a predetermined process execution loop information provided by the host operating system hosting the controller.

The predetermined process execution loop information may indicate in which order the real-time functions should be executed. In particular, the execution order of the non-real-time functions is not prescribed or influenced by the predetermined process execution loop information.

The predetermined process execution loop information can characterize a process execution loop, in which the real-time functions are executed on after another, in a given order and repeatedly. Such a process execution loop is particularly useful in industrial environments, for example in product fabrication, where all tasks need to be performed in a given order at critical times and repeated multiple times.

According to a further embodiment, the execution unit is configured to prioritize the execution of the real-time functions over the execution of the non-real-time functions.

In particular, the execution unit may first execute all the real-time functions and only afterwards execute the non-real time functions. The non-real-time functions are for example executed during a time in which no real-time function needs to be executed.

There may be a hierarchy within the real-time functions so that the real-time functions can have different priorities. For example, the real-time functions may be categorized into functions with high, medium and low priority. The real-time functions with high priority may be emergency or safety commands and can be executed "immediately". The real-time functions with medium priority may be executed along the order prescribed by the predetermined process execution loop information. The real-time functions with low priority may be executed after all real-time functions with medium priority executed in the process execution loop were executed. Finally, the non-real-time functions can be executed when no real-time function is left to be executed. Other priority categorizations are also possible.

According to a further embodiment, the execution unit is configured to execute real-time functions and non-real-time functions stored in different software containers for controlling the controlled system. In particular, the controlled system may be conjunctly controlled by functions from different containers.

According to a further embodiment, the execution unit is further configured to execute operating system functions stored in the host operating system hosting the controller for controlling the controlled system.

In particular, the operating system may store additional function (real-time or non-real-time functions), called operating system functions, which may also serve to control the controlled system when they are executed. The operating system function may be used conjunctly by the execution unit to control the controlled system.

According to a further embodiment,
each software container has a set of container constraints assigned thereto, the container constraints including information about computational resources necessary for executing the functions in the software container and/or information about real-time requirements necessary for executing the real-time functions stored in the software container; the controller further comprising:
a verification unit for verifying whether the execution unit of the controlled system for holding the software containers fulfills all container constraints of a software container to be executed; wherein
the execution unit is configured to execute the functions of the software container to be executed only if the verification unit determines that the execution unit fulfills all container constraints of the software container to be executed.

The computational resources included in the container constraints for example include an execution time required for executing a particular function, an amount of memory and/or a particular hardware peripheral/interface required for executing a particular function. Examples for the information about real-time requirements include an execution time required for executing a particular function, an amount of memory and/or a particular hardware peripheral/interface required for executing a particular real-time function.

Verifying whether all requirements for executing the function to be executed are fulfilled prior to executing the function is particularly useful to avoid incorrect or incomplete execution of the function to be executed as well as problems such as data congestions or the like.

According to a further embodiment, the controller further comprises a monitoring portion for monitoring an execution time of an execution of one of the real-time functions by the execution unit.

Such a monitoring can allow to keep track of the execution of the real-time-functions and to verify that they are correctly executed. The monitoring can be useful in recognizing errors and taking corresponding countermeasures.

According to a further embodiment, the controller further comprises
a trust unit for verifying whether a software container to be executed is a trusted software container; wherein
the execution unit is configured to execute the functions of the software container to be executed only if the trust unit determines that the software container to be executed is a trusted software container.

In particular, the controller may only execute trusted containers, for example containers provided by a trusted provider. Thereby, the controller may avoid the execution of potentially harmful untrusted software and improve the safety of the controller, of the host system and/or of the controlled system.

According to a further embodiment, the controller further comprises
a parametrizing unit for providing all the software containers to be executed with a same parameter information; wherein
the execution unit is configured to execute the functions of the software containers to be executed based on the parameter information provided by the parametrizing unit.

The parametrizing unit may centrally provide all the containers with a common parameter information. The parameter information may be an information relating to the controlled system. By the central provision of the parameter information to all containers to be executed at the moment of execution, the control process is facilitated because not all containers need to be provided with the parameter information individually.

According to a further embodiment, the execution unit is configured to execute the real-time functions scheduled in the predetermined process execution loop information based on shared information shared by the scheduled real-time functions.

The centrally provided shared information may be an information relating to the controlled system. By the central provision of the shared information to all real-time functions to be executed at the moment of execution, the control process is facilitated because not all real-time functions need to be provided with the shared information individually.

According to a further embodiment,
the controlled system is an automation system; and/or
the controlled system comprising sensors and/or actuators and the execution unit is configured to induce an activation and/or deactivation of the sensors and/or actuators of the controlled system when it executes the functions stored in the software containers.

According to a second aspect, an industrial PC (IPC) comprising the controller according to the first aspect or according to an embodiment thereof is provided. The embodiments and features described with reference to the controller of the first aspect apply mutatis mutandis to the IPC of the second aspect.

According to a third aspect, a control method for controlling a controlled system, in particular using the controller according to the first aspect or according to an embodiment thereof, is provided. The method comprises:
storing a real-time function and a non-real-time function in parallel in a plurality of software containers,
executing the stored real-time functions and non-real-time functions for controlling the controlled system, the real-time functions being executed within predetermined controller time constraints and the non-real-time functions being executed without time constraints.

The embodiments and features described with reference to the controller of the first aspect apply mutatis mutandis to the method of the third aspect.

According to a fourth aspect, a computer program product comprising a program code for executing the control method according to claim the third aspect when run on at least one computer is provided.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a controller according to a first embodiment;
- Fig. 2: shows an example of an industrial environment including the controller according to the first embodiment;
- Fig. 3: shows a control method according to an embodiment;
- Fig. 4: shows a controller according to a second embodiment
- Fig. 5: shows an example of a process execution loop;
- Fig. 6: shows an extension of the control method according to the embodiment.

In the Figures, like reference numerals designate like or functionally equivalent elements, unless otherwise indicated.

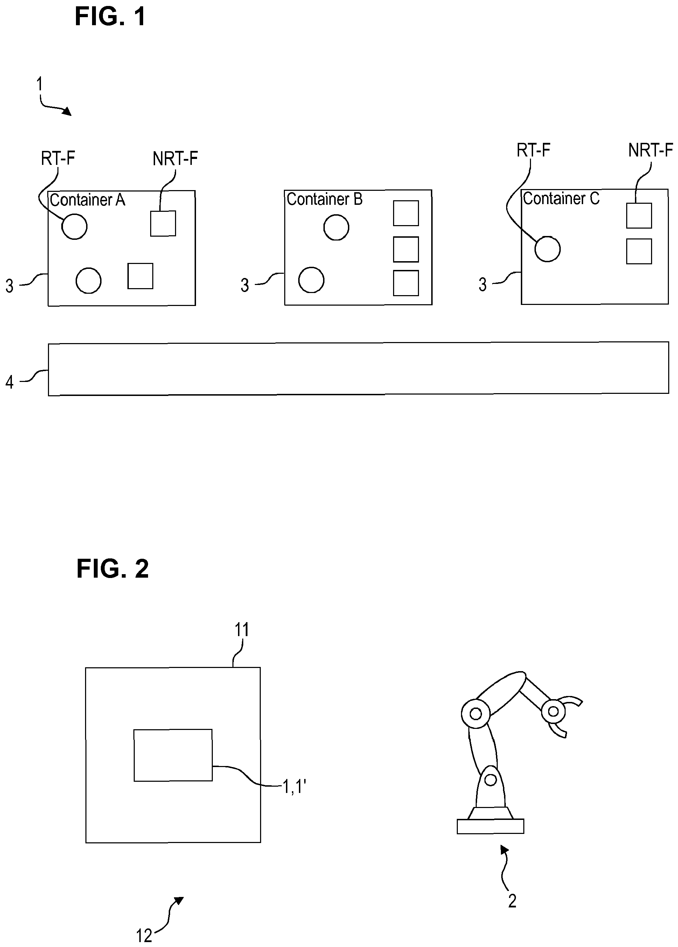

Fig. 1 shows a controller 1 according to a first embodiment. The controller 1 comprises three software containers 3 labelled A, B and C and an execution unit 4. The containers 3 each store at least one real-time function RT-F and at least one non-real-time function NRT-F. For simplicity of the figures, not all functions RT-F and NRT-F are provided with reference signs. However, it is understood that all real-time functions RT-F are represented as circles while all non-real-time functions NRT-F are represented as squares.

The controller 1 is part of an industrial environment 12 shown in Fig. 2. The industrial environment 12 includes an industrial PC 11 comprising the controller 1 and a controlled system 2, which is here an industrial robot. The controller 1 can communicate with the robot 2 wirelessly in order to control the robot 2.

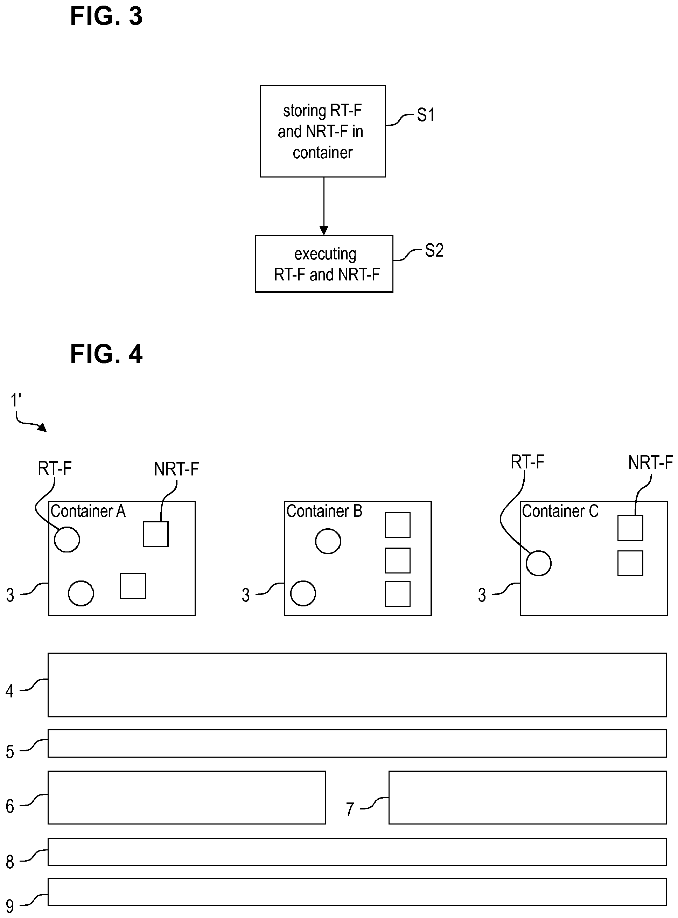

In order to control the robot 2, the controller 1 executes the functions RT-F and NRT-F using the execution unit 4. The real-time functions RT-F relate to critical control aspects of the robot 2, for example to its movements, while the non-real-time functions NRT-F relate to non-critical control aspects of the robot 2, for example to a monitoring of the performed movements for optimization thereof. The execution of the functions RT-F and NRT-F is described in view of Fig. 3, which shows a control method according to a first embodiment.

In a step S1 of Fig. 3, the functions RT-F and NRT-F are stored in the containers 3. The distribution of the functions RT-F and NRT-F into the separate containers is performed in accordance with the contents of the functions RT-F and NRT-F and the control on the robot 2 that they induce. Functions RT-F and NRT-F relating to similar control aspects are stored together in the containers 3 shown in Fig. 1.

In a step S2 of Fig. 3, the functions RT-F and NRT-F are executed by the execution unit 4. In detail, the execution unit 4 executes the real-time functions RT-F within the predetermined time constraints, in particular without buffering time, while it executes the non-real-time functions NRT-F without such time constraints. The execution of the functions RT-F and NRT-F is explained in more detail in view of Fig. 4, which shows a more complex controller 1'.

Fig. 4 shows a controller 1' according to a second embodiment. The controller 1' differs from the controller 1 of the first embodiment in that it further comprises a system call interface 5, a Linux kernel 6, a real-time kernel 7, a real-time hardware abstraction layer 8 and hardware 9. The controller 1' can be used to control the robot 2 of Fig. 2 by performing the steps of the control method of Fig. 3.

The system call interface 5 provides an interface between the operating systems 6, 7 and the containers 3 to allow the containers 3 to request services of the operating systems 6, 7. The real-time hardware abstraction layer 8 is a layer of programming that allows the operating system 6, 7 to interact with the hardware 9. The hardware 9 is here a CPU, a disk or the like.

The execution of a selected real-time function RT-F (part of step S2 of Fig. 3) involves the mapping, by the execution unit 4, of the selected real-time function RT-F to a corresponding real-time task in the real-time kernel 7 forming a host operating system. The real-time kernel 7 performs the scheduling and resource management for the real-time task.

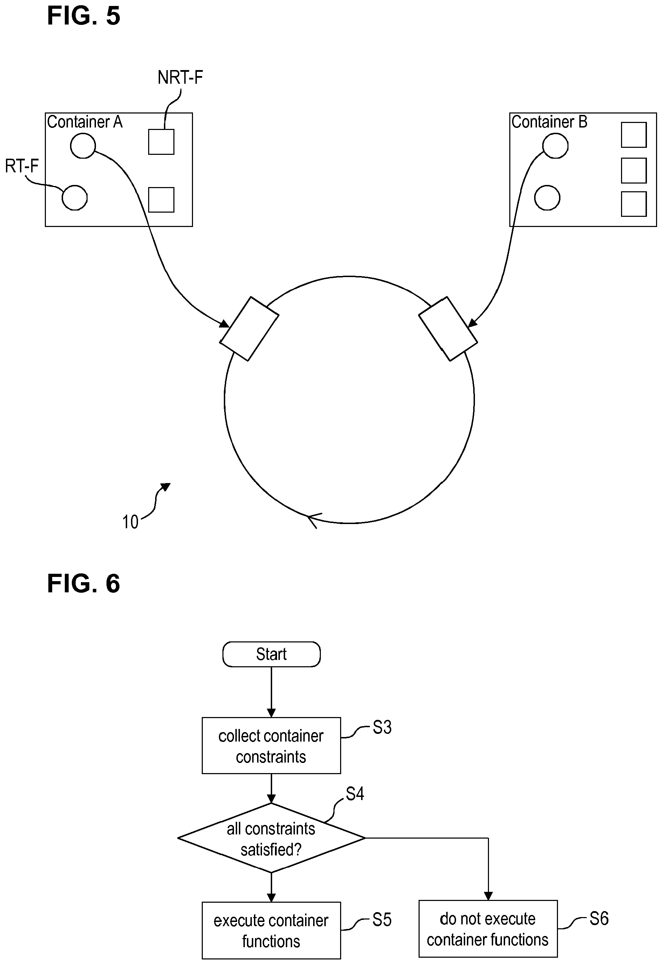

Fig. 5 details the execution process of real-time functions RT-F. Namely, the real-time functions RT-F from different containers 3 are executed according to an order prescribed by a predetermined process execution loop information such as to form a process execution loop 10. In the process execution loop 10, two real-time functions RT-F are repeatedly executed in real-time: one of the real-time functions RT-F stored in the container 3 labelled "A" and one of the real-time functions RT-F stored in the container 3 labelled "B". In Fig. 5, the rectangles on the loop 10 indicate the execution of the respective functions RT-F. The real-time functions RT-F executed as part of the process execution loop 10 are all executed based on a same shared information characterizing the robot 2.

In the example of Fig. 5, only a selection of the real-time functions RT-F is executed. In alternative embodiments, more or all real-time functions RT-F are executed as part of the process execution loop 10.

Referring back to Fig. 4, the execution of a selected non-real-time function NRT-F (part of step S2 of Fig. 3) involves the mapping, by the execution unit 4, of the selected non-real-time function NRT-F to a corresponding process in the Linux kernel 6. This is for example done using the namespace feature in the Linux kernel 6.

The non-real-time functions NRT-F are executed when all real-time functions RT-F that needed to be executed in order to satisfy the controller time constraints have been executed, that is when there is enough time in the process execution loop 10 to execute non-real-time functions NRT-F.

Fig. 6 shows an extension of the control method of Fig. 3. The method of Fig. 6 comprises the steps S3 - S6, which can be performed between the steps S1 and S2 of Fig. 3.

Namely, in a step S3, the execution unit 4 obtains container constraints from a container 3 to be executed. The constraints include a required execution time and a required storage amount for execution.

Then, in a step S4, a verification unit (not shown) of the controller 1, 1' verifies whether the execution unit 4 fulfills all the constraints. If the verification unit determines at step S4 that the execution unit 4 fulfills all the constraints, the execution unit 4 moves on to executing the functions RT-F and NRT-F of the container 3 to be executed in a step S5. The execution of the functions RT-F and NRT-F is performed along the lines described in step S2 of Fig. 3.

If the verification unit determines at step S4 that the execution unit 4 does not fulfill all the constraints, the execution unit 4 does not execute the functions RT-F and NRT-F of the container 3 to be executed (step S6). Additionally, the controller 1, 1' can emit an alarm indicating that the constraints are not all fulfilled.

Although the present invention has been described in accordance with preferred embodiments, it is obvious for the person skilled in the art that modifications are possible in all embodiments. For example, the number of containers 3 provided in the controller 1, 1' can be greater or smaller than three. The number and kind of functions RT-F and NRT-F stored in the respective containers may also vary. The execution order indicated by the process execution loop information can also vary. The controller 1, 1' may also verify the origin of a container 3 to be executed and only allow the execution when a trust unit determines that the container 3 is a trusted container. The controller 1, 1' may comprise further entities, for example the verification unit, the trust unit and/or the parametrizing unit described above.

### REFERENCE NUMERALS

- 1, 1': controller
- 2: controlled system
- 3: software container
- 4: execution unit
- 5: system call interface
- 6: Linux kernel
- 7: real-time kernel
- 8: real-time hardware abstraction layer
- 9: hardware
- 10: process execution loop
- 11: industrial PC
- 12: industrial environment
- NRT-F: non-real-time function
- RT-F: real-time function
- S1 - S6: method steps

## Claims

1. A controller (1, 1') for controlling a controlled system (2), comprising:
a plurality of software containers (3), which are each configured to store a real-time function (RT-F) and a non-real-time function (NRT-F) in parallel; and
an execution unit (4) for executing the stored real-time functions (RT-F) and non-real-time functions (NRT-F) for controlling the controlled system (2), the execution unit (4) being configured to execute the real-time functions (RT-F) within predetermined controller time constraints and to execute the non-real-time functions (NRT-F) without time constraints.

2. The controller according to claim 1, wherein
the execution unit (4) is configured to execute a selected real-time function (RT-F) selected from the real-time functions (RT-F) stored in the software containers (3) by mapping the selected real-time function (RT-F) to a corresponding real-time task in a host operating system (7) hosting the controller (1, 1').

3. The controller according to claim 1 or 2, wherein
the execution unit (4) is configured to execute a selected non-real-time function (NRT-F) selected from the non-real-time functions (NRT-F) stored in the software containers (3) using a package stored in a same software container (3) as the selected non-real-time function (NRT-F), in particular using the namespaces feature in the Linux kernel.

4. The controller according to one of claims 1 to 3, wherein the execution unit (4) comprises a plurality of processor cores and is configured to execute the real-time functions (RT-F) on a different processor core or on different processor cores than the non-real-time functions (NRT-F).

5. The controller according to one of claims 1 to 4, wherein the execution unit (4) is configured to control the controlled system (2) by executing the real-time functions (RT-F) in an order prescribed by a predetermined process execution loop information provided by the host operating system hosting the controller (1, 1').

6. The controller according to claim 5, wherein the execution unit (4) is configured to prioritize the execution of the real-time functions (RT-F) over the execution of the non-real-time functions (NRT-F).

7. The controller according to one of claims 1 to 6, wherein the execution unit (4) is configured to execute real-time functions (RT-F) and non-real-time functions (NRT-F) stored in different software containers (3) for controlling the controlled system (2).

8. The controller according to one of claims 1 to 7, wherein the execution unit (4) is further configured to execute operating system functions stored in the host operating system (6, 7) hosting the controller (1, 1') for controlling the controlled system (2).

9. The controller according to any one of claims 1 to 8, wherein
each software container (3) has a set of container constraints assigned thereto, the container constraints including information about computational resources necessary for executing the software container (3) and/or information about real-time requirements necessary for executing the real-time functions (RT-F) stored in the software container (3); the controller (1, 1') further comprising:
a verification unit for verifying whether the execution unit (4) of the controlled system (2) for holding the software containers (3) fulfills all container constraints of a software container (3) to be executed; wherein
the execution unit (4) is configured to execute the functions of the software container (3) to be executed only if the verification unit determines that the execution unit (4) fulfills all container constraints of the software container (3) to be executed.

10. The controller according to any one of claims 1 to 9, further comprising
a monitoring portion for monitoring an execution time of an execution of one of the real-time functions (RT-F) by the execution unit (4).

11. The controller according to any one of claims 1 to 10, further comprising
a trust unit for verifying whether a software container (3) to be executed is a trusted software container; wherein
the execution unit (4) is configured to execute the functions of the software container (3) to be executed only if the trust unit determines that the software container (3) to be executed is a trusted software container.

12. The controller according to any one of claims 1 to 11, further comprising
a parametrizing unit for providing all the software containers (3) to be executed with a same parameter information; wherein
the execution unit (4) is configured to execute the functions of the software containers (3) to be executed based on the parameter information provided by the parametrizing unit.

13. The controller according to any one of claims 5 to 12, wherein the execution unit (4) is configured to execute the real-time functions (RT-F) scheduled in the predetermined process execution loop information based on shared information shared by the scheduled real-time functions (RT-F).

14. The controller according to any one of claims 1 to 13, wherein
the controlled system (2) is an automation system; and/or
the controlled system (2) comprises sensors and/or actuators and the execution unit (4) is configured to induce an activation and/or deactivation of the sensors and/or actuators of the controlled system (2) when it executes the functions stored in the software containers (3).

15. An industrial PC (IPC) (11) comprising the controller (1, 1') according to one of claims 1 to 14.

16. A control method for controlling a controlled system (2), in particular using the controller (1, 1') according to any one of claims 1 to 14, comprising:
storing (S1) a real-time function (RT-F) and a non-real-time function (NRT-F) in parallel in a plurality of software containers (3),
executing (S2) the stored real-time functions (RT-F) and non-real-time functions (NRT-F) for controlling the controlled system (2), the real-time functions (RT-F) being executed within predetermined controller time constraints and the non-real-time functions (NRT-F) being executed without time constraints.

17. A computer program product comprising a program code for executing the control method according to claim 16 when run on at least one computer.
